# EUROPEAN PATENT SPECIFICATION

(11) **EP 2 821 293 B1**
(45) Date of publication and mention of the grant of the patent: **23.11.2016**
(21) Application number: 13175214.9
(22) Date of filing: 05.07.2013
(51) Int. Cl.: B60R 19/56, B60R 21/00

(54) **Bracket arrangement, side panel arrangement for a vehicle and method for retrofitting a side panel**
Klammeranordnung, Seitenwandanordnung für ein Fahrzeug und Verfahren zum Nachrüsten einer Seitenwand
Agencement de support, agencement de panneau latéral pour véhicule et procédé pour moderniser un panneau latéral

(43) Date of publication of application: 07.01.2015
(73) Proprietor: OY PARLOK AB, 21600 Parainen (FI)
(72) Inventor: Lehtonen, Jaakko, 20810 Turku (FI); Vainio, Veijo, 21600 Parainen (FI); Sillantaka, Kari, 20300 Turku (FI); Jakobsson, Nicklas, 21600 Parainen (FI); Heikkilä, Ismo, 21600 Parainen (FI); Salminen, Jari, 21420 Lieto (FI); Jernström, Ann, 21600 PARAINEN (FI)
(74) Representative: Turun Patenttitoimisto Oy

(56) References cited:
- EP-A1- 0 857 620
- EP-A1- 2 301 811
- DE-A1- 4 317 391
- DE-U1- 9 113 088
- US-A- 3 909 053
- US-A1- 2010 264 690

## Description

### Field of the invention

The present invention relates to a bracket arrangement for a vehicle, a semitrailer or a trailer and a method for retrofitting a side panel to a side guard system according to the preambles of the independent claims presented below.

### Background of the invention

According to regulations a lorry or similar commercial vehicle, a semitrailer or a trailer comprises a side guard or a side valance system for preventing people accidentally to fall under the vehicle. The purpose of a side guard system is particularly to protect pedestrians, cyclists or the like from being injured by the wheels of a lorry. The side guard system of the vehicle comprises typically one or more horizontal longitudinal supports. These side guard system structures induce an air resistance and so they affect also e.g. the consumption of the fuel of the vehicle.

EP 2301811 A1 presents a side guard system, which comprises longitudinal supports and a panel arranged between the supports. The supports comprise rail means and the panel comprises counterparts fitted for the rail means on its longitudinal sides.

DE 4317391 A1 presents a bracket arrangement for a side guard system according to the preamble of claim 1, where longitudinal supports and a panel are arranged between vertical brackets.

### Summary of the Invention

An object of the present invention is to provide a bracket arrangement which makes possible to retrofit a side panel to the side guard system of a vehicle, a semitrailer or a trailer.

An object of the present invention is especially to provide an arrangement which improves aerodynamics of the vehicle and so e.g. the consumption of the fuel can be reduced.

In order to realize the above-mentioned objects, among other things, the present invention is characterised by what is presented in the characterising parts of the enclosed independent claims.

Some preferred embodiments of the invention will be described in the other claims.

The embodiments and advantages mentioned in this text are in suitable parts applicable to a bracket arrangement as well as the method according to the invention, even if this is not always specifically mentioned.

A typical bracket arrangement according to the invention for retrofitting a side panel to a side guard system of a vehicle, a semitrailer or a trailer comprises
- an elongated first bracket, and
- an elongated second bracket,
of which first and second bracket one is attachable to the side guard system of the vehicle, the semitrailer or the trailer, and the other is releasably attachable to said bracket attachable to the side guard system,
and the side panel is attachable to one of said first and second brackets.

A typical side panel arrangement, which is to be retrofitted to a side guard system of a vehicle, a semitrailer or a trailer comprises
- a bracket arrangement, which is attachable to the side guard system of the vehicle, the semitrailer or the trailer, and
- a side panel, which is releasably attached to the side guard system by means of the bracket arrangement.

In a typical method according to the invention for retrofitting a side panel to a side guard system of a vehicle, a semitrailer or a trailer
- a bracket arrangement according to the invention is attached to the side guard system so that the side guard system is between the first bracket and the second bracket of the bracket arrangement, and
- the side panel is attached to one of the brackets.

By means of the bracket arrangement of the invention, a side panel or the like can be retrofitted to the existing side guard system of the vehicle, the semitrailer or the trailer. The bracket arrangement of the invention is designated so that it locks the side panel in its place, but it can also be easily unfastened. The bracket arrangement of the invention also permits a heat expansion of the side panel, if the side panel has been manufactured from plastic or the like which has a greater heat expansion coefficient than the side guard system manufactured from metal.

The bracket arrangement of the invention comprises two parts, an elongated first bracket and an elongated second bracket. According to an embodiment of the invention the first bracket of the bracket arrangement is attachable to the side guard system of the vehicle and the second bracket of the bracket arrangement is releasably attachable to the first bracket. A side panel or the like is attached to the second bracket by means of screws, rivets or the like. For sake of clarity, the invention is described by using this definition, although the brackets can also be installed the other way around.

The first and the second bracket of the bracket arrangement are designated so that they fitted to each other. In an embodiment of the invention, the first ends of the first and second brackets are shaped so that the first end of the second bracket is arrangeable over the first end of the first bracket in an upright position of the bracket arrangement. This shaping of the brackets arrangement allows that the first ends of the brackets do not need to attach mechanically to each other, but the first end of the second bracket keep in its place by the shaping of the first ends of the brackets. A second end of the second bracket is arranged to be attachable to a second end of the first bracket with locking means. The second end of the second bracket can comprise e.g. a locking element, which is arrangeable to the hole, slot or the like in the second end of the first bracket, and so the bracket arrangement and also the side panel can be locked at their place. The locking element can be opened and so the side panel arrangement can be easily detached for e.g. service. When the locking element or other locking means are opened, the second end of the second bracket can be withdrawn from the first bracket and then also the first end of the second bracket can be lift up from the first end of the first bracket. The first bracket will leave to its place in connection with the existing side guard system, only the second bracket need to detach in order that the side panel can be removed. Thus, the bracket arrangement of the invention makes possible an easy retrofitting and also detaching of the side panels to the existing side guard system of the vehicle.

In a preferred embodiment of the invention, the locking means, such as a locking element, arranged in the second end of the second bracket are designated so that it eliminates the vibration of the whole side panel arrangement, when it is locked.

The first bracket of the bracket arrangement comprises an assembling groove, which is mainly in a longitudinal direction of the bracket. The bracket can comprise one, two or more grooves or the like. In a typical embodiment of the invention, the bracket comprises two assembling grooves at both ends of the bracket.

Typically, the bracket arrangement further comprises one, two or more fastening elements for attaching the first bracket to the side guard system, which elements are arrangeable between the first bracket and the second bracket. Typically, a side guard system comprises one or more horizontal longitudinal supports and the one of the brackets of the bracket arrangement are attached to the supports so that fastening elements of the bracket arrangement are arranged tightly against the supports in the first side and/or second side of the support, i.e. the fastening elements fasten the bracket to the side guard system. In an embodiment of the invention the side guard system comprises two horizontal longitudinal supports arranged at a distance from each other. Alternatively, the existing side guard system of the vehicle can be e.g. a plate or the like, but despite of the structure of the side guard system the bracket arrangement of the invention can be installed to the side guard system. In a preferred embodiment of the invention the bracket arrangement is attached to the side guard system so that the existing side guard system of the vehicle is between the first bracket and the second bracket of the bracket arrangement. Typically, the side guard system structures are in horizontal direction and the brackets of the bracket arrangement are in vertical direction.

Fastening elements are arranged in the assembling grooves, and so they are arranged to be movable along the assembling grooves. Typically, the fastening elements are fastened to the first bracket by using screws, bolts or the like.

Fastening height of the bracket arrangement in relation to the side guard system is adjusted by moving fastening elements of the bracket arrangement in the assembly grooves of the first bracket. Thus, the side panel arrangement of the invention can be retrofitted to the side guard systems of any size.

The number of the bracket arrangements, which are needed to retrofit a side panel to a side guard system of the vehicle, is dependent on the length of the side guard system. For example, a three metres long side guard system can comprise four bracket arrangements of the invention.

The side panel arrangement may further comprise an air deflector arranged front of the side panel in a longitudinal direction of the vehicle (when seen in the direction of driving of the vehicle).

A typical air deflector for a side panel arrangement of a vehicle, a semitrailer or a trailer is shaped so that the air flow is mainly guided to an outer surface of the side panel, when the vehicle is moving. Thus, the air resistance of the side panel arrangement can also be reduced and thus the consumption of the fuel is also reduced. In an embodiment of the invention, a first side end of the air deflector is arranged to form a continuous surface with the surface of a side panel, and a second side end of the air deflector is curved in such a manner that it essentially covers the end of a side guard to which the side panel is attached, typically the front end of the side guard.

### Description of the drawings

The invention will be described in more detail with reference to appended drawings, in which
- Fig. 1: shows a bracket arrangement according to a first embodiment,
- Fig. 2: shows the bracket arrangement of Figure 1 when arranged on a side guard system,
- Fig. 3: shows the bracket system of Figure 1 together with a side panel,
- Fig. 4: shows a trailer equipped with a side panel arrangement according to an embodiment, and
- Fig. 5: shows an air deflector according to an embodiment.

### Detailed description of the drawings

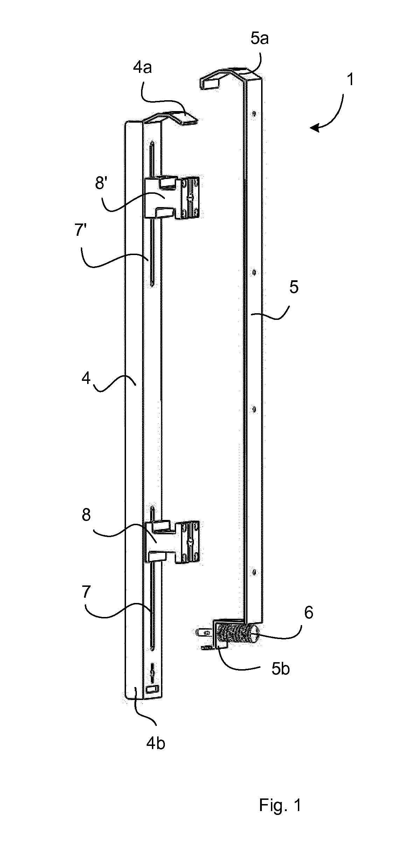

Figure 1 shows a bracket arrangement according to a first embodiment. The bracket arrangement 1 has two elongated brackets, a first, inner bracket 4 and a second, outer bracket 5. They each have a longitudinal direction, which is the direction of the longest dimension of the bracket, the vertical direction in the Figure. In the following description, the first bracket is called the inner bracket and the second bracket is called the outer bracket. It is however obvious to a person skilled in the art that in another embodiment, the brackets could be arranged in a different manner. The inner bracket 4 is attachable to a side guard system of a vehicle, a semitrailer or a trailer and comprises two assembling grooves 7 and 7', at both ends of the inner bracket 4. The assembling grooves are arranged also in the longitudinal direction of the inner bracket 4. Into these assembling grooves are arranged two fastening elements 8 and 8', and the fastening elements are arranged to be movable along the assembling grooves. At a first end 4a, in this Figure the upper end, the inner bracket 4 is shaped to have a curved form. At a second end 4b, in this Figure the lower end, the inner bracket 4 is equipped with two slots, an upper longitudinal slot and a lower slot in the width direction, the function of which will be explained below.

The outer bracket 5 of the bracket arrangement 1 has a similar elongated shape than the inner bracket 4. Its first (upper) end 5a is formed such that is can be arranged over the first end 4a of the inner bracket 4, i.e. it has essentially the same shape than the first end 4a of the inner bracket 4. The second (lower) end 5b of the outer bracket comprises locking means 6 comprising in this embodiment a locking element arranged to enter the longitudinal upper slot at the second end 4b of the inner bracket, as well as a protrusion arranged to enter the lower slot in the width direction. This two-part locking means 6 ensures that the outer bracket 5 is releasably attached to the inner bracket. The outer bracket 5 can also be equipped with small holes for attaching a side panel.

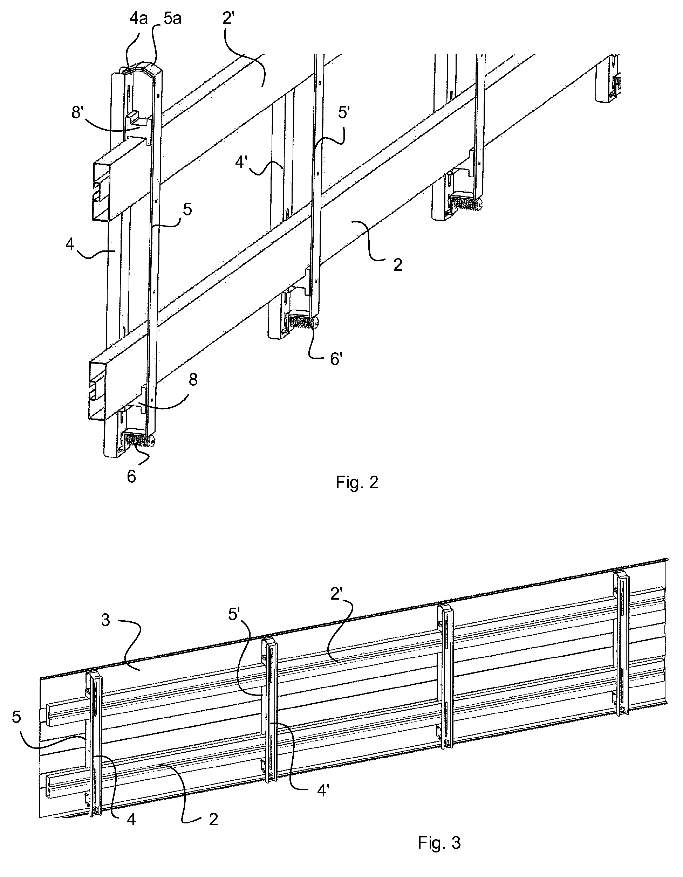

Figure 2 shows the bracket arrangement of Figure 1 when arranged on a side guard system. In this Figure, the inner bracket 4 is attached to the longitudinal supports 2, 2' of the side guard system by means of the fastening elements 8, 8', which are arranged tightly against the supports on both its upper side and its lower side.

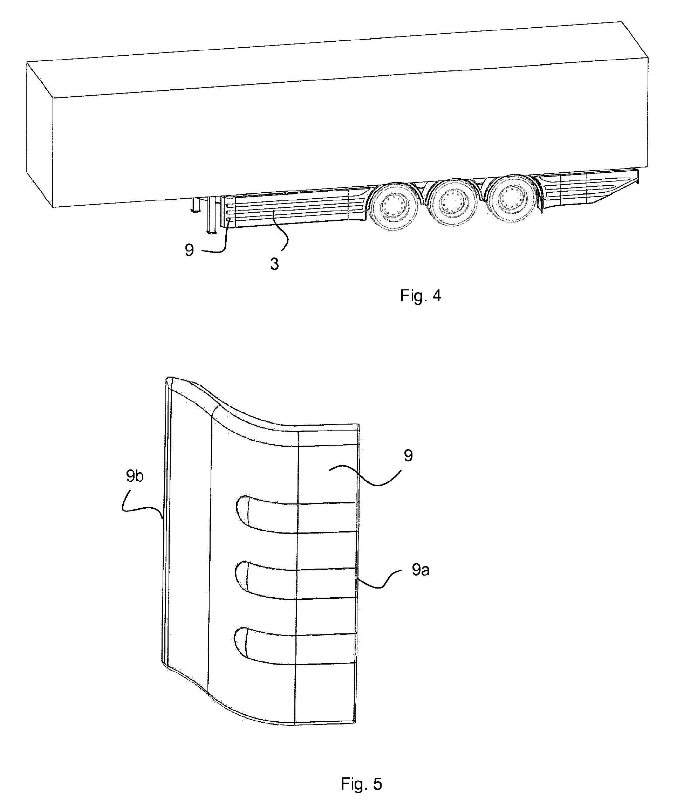

Figure 3 shows the bracket system of Figure 1 together with a side panel, wherein the whole system is shown from another side than in Figure 2. The side panel 3 is attached to the outer bracket 5. Figure 4 shows a semitrailer equipped with a side panel arrangement according to an embodiment, showing also an air deflector 9, at the foremost end of the side panel when seen in the direction of driving of the trailer.

Figure 5 shows an air deflector according to an embodiment. The air deflector 9 is shaped so that the air flow is mainly guided to outer surface of the side panel, when the vehicle is moving. The air deflector 9 has a first side end 9a of the air deflector that is arranged to form a continuous surface with the surface of a side panel. It also has a second side end 9b that is curved in such a manner that it essentially covers the end of a side guard (not shown in the Figure).

Many variations of the present invention will suggest themselves to those skilled in the art in light of the above detailed description. Such obvious variations are within the full intended scope of the appended claims.

## Claims

1. A bracket arrangement (1) for retrofitting a side panel (3) to an existing side guard system (2, 2') of a vehicle, a semitrailer or a trailer, which side guard system comprises one or more horizontal longitudinal supports, wherein the bracket arrangement (1) comprises
- an elongated first bracket (4), which is attachable to the side guard system (2, 2') and
- an elongated second bracket (5), which is releasably attachable to the first bracket (4),
- one or more fastening elements (8, 8') for attaching the first bracket to the side guard system (2, 2'), which elements (8, 8') are arrangeable between the first bracket (4) and the second bracket (5),
whereby the side panel (3) is attachable to one of said first and second brackets, and the bracket arrangement (1) is attached to the side guard system so that the side guard system (2, 2') is between the first bracket (4) and the second bracket (5) of the bracket arrangement (1), **characterized in that** the first bracket (4) comprises an assembling groove (7, 7'), which is mainly in a longitudinal direction of the bracket, whereby a fastening height of the bracket arrangement (1) in relation to the side guard system (2, 2') is arranged to be adjusted by moving the one or more fastening elements (8, 8') of the bracket arrangement in the assembling groove (7, 7') of the bracket (4).

2. The bracket arrangement according to claim 1, **characterized in that** the side guard system structures are in horizontal direction and the brackets of the bracket arrangement are in vertical direction.

3. The bracket arrangement according to claim 1, **characterized in that** the side guard system comprises two horizontal longitudinal supports arranged at a distance from each other.

4. The bracket arrangement according to claim 1, **characterized in that** the first ends of the first and second brackets (4a, 5a) are shaped so that the first end of the second bracket (5a) is arrangeable over the first end of the first bracket (4a) in an upright position of the bracket arrangement.

5. The bracket arrangement according to any of the preceding claims, **characterized in that** a second end of the second bracket (5b) is attachable to a second end of the first bracket (4b) with locking means (6, 6').

6. The bracket arrangement according to any of the preceding claims, **characterized in that**
- the side panel (3) is releasably attached to the side guard system (2, 2') by means of the bracket arrangement (1).

7. The bracket arrangement according to any of the preceding claims, **characterized in that** it further comprises an air deflector (9) arranged front of the side panel (3) in a longitudinal direction of the vehicle.

8. A method for retrofitting a side panel (3) to a side guard system (2, 2') of a vehicle, a semitrailer or a trailer, in which method
- a bracket arrangement (1) according to any of the claims 1 to 5 is attached to the side guard system so that the side guard system (2, 2') is between the first bracket (4) and the second bracket (5) of the bracket arrangement, and
- the side panel (3) is attached to one of the brackets **characterized in that** a fastening height of the bracket arrangement (1) in relation to the side guard system (2, 2') is adjusted by moving fastening elements (8, 8') of the bracket arrangement in assembling grooves (7, 7') of the bracket (4).

9. The method according to claim 8, **characterized in that** the side guard system comprises one or more horizontal longitudinal supports (2, 2'), and the one of the brackets (4, 4') of the bracket arrangement are attached to the supports (2, 2') so that fastening elements (8, 8') of the bracket arrangement are arranged tightly against the supports (2, 2') in the first side and/or second side of the support.

## Patentansprüche

1. Halterungsanordnung (1) zum Umrüsten einer Seitenplatte (3) an einem existierenden seitlichen Schutzsystem (2, 2') eines Fahrzeugs, eines Aufliegers oder eines Anhängers,
wobei das Schutzsystem einen oder mehrere horizontal in Längsrichtung verlaufende Träger umfasst, wobei die Halterungsanordnung (1) umfasst
- eine längliche erste Halterung (4), welche an das seitliche Schutzsystem (2, 2') anbringbar ist, und
- eine längliche zweite Halterung (5), welche lösbar an die erste Halterung (4) anbringbar ist,
- ein oder mehrere Befestigungselemente (8, 8'), um die erste Halterung an dem seitlichen Schutzsystem (2, 2') anzubringen, wobei die Elemente (8, 8') zwischen der ersten Halterung (4) und der zweiten Halterung (5) platzierbar sind,
wobei die Seitenplatte (3) an die erste oder zweite Halterung anbringbar ist, und wobei die Halterungsanordnung (1) an dem seitlichen Schutzsystem angebracht ist, so dass sich das seitliche Schutzsystem (2, 2') zwischen der ersten Halterung (4) und der zweiten Halterung (5) der Haltungsanordnung (1) befindet,
**dadurch gekennzeichnet, dass** die erste Halterung (4) eine Montagevertiefung (7, 7') umfasst, welche hauptsächlich in einer Längsrichtung der Halterung liegt, wobei eine Befestigungshöhe der Halterungsanordnung (1) bezüglich des seitlichen Schutzsystems (2, 2') angeordnet ist, um eingestellt zu werden, indem das eine oder die mehreren Befestigungselemente (8, 8') der Haltungsanordnung in der Montagevertiefung (7, 7') der Halterung (4) bewegt werden.

2. Halterungsanordnung nach Anspruch 1, **dadurch gekennzeichnet, dass** Strukturen des seitlichen Schutzsystems in horizontaler Richtung und die Halterungen der Halterungsanordnung in vertikaler Richtung verlaufen.

3. Halterungsanordnung nach Anspruch 1, **dadurch gekennzeichnet, dass** das seitliche Schutzsystem zwei horizontal in Längsrichtung verlaufende Träger umfasst, welche in einem Abstand voneinander angeordnet sind.

4. Halterungsanordnung nach Anspruch 1, **dadurch gekennzeichnet, dass** die ersten Enden der ersten und der zweiten Halterung (4a, 5a) geformt sind, so dass das erste Ende der zweiten Halterung (5a) über dem ersten Ende der ersten Halterung (4a) bei einer aufrechten Stellung der Halterungsanordnung platzierbar ist.

5. Halterungsanordnung nach einem der vorhergehenden Ansprüche, **dadurch gekennzeichnet, dass** ein zweites Ende der zweiten Halterung (5b) an einem zweiten Ende der ersten Halterung (4b) mit Verriegelungsmitteln (6, 6') anbringbar ist.

6. Halterungsanordnung nach einem der vorhergehenden Ansprüche, **dadurch gekennzeichnet, dass**
- die Seitenplatte (3) lösbar mittels der Halterungsanordnung (1) an dem seitlichen Schutzsystem (2, 2') angebracht ist.

7. Halterungsanordnung nach einem der vorhergehenden Ansprüche, **dadurch gekennzeichnet, dass** sie darüber hinaus eine Luftablenkfläche (9) umfasst, welche in einer Längsrichtung des Fahrzeugs vor der Seitenplatte (3) angeordnet ist.

8. Verfahren zum Umrüsten einer Seitenplatte (3) an einem seitlichen Schutzsystem (2, 2') eines Fahrzeugs, eines Aufliegers oder eines Anhängers, wobei bei dem Verfahren
- eine Halterungsanordnung (1) nach einem der Ansprüche 1 bis 5 an dem seitlichen Schutzsystem angebracht wird, so dass sich das seitliche Schutzsystem (2, 2') zwischen der ersten Halterung (4) und der zweiten Halterung (5) der Halterungsanordnung befindet, und
- die Seitenplatte (3) an einer der Halterungen angebracht wird,
**dadurch gekennzeichnet, dass** eine Befestigungshöhe der Halterungsanordnung (1) bezüglich des seitlichen Schutzsystems (2, 2') eingestellt wird, indem Befestigungselemente (8, 8') der Halterungsanordnung in Montagevertiefungen (7, 7') der Halterung (4) bewegt werden.

9. Verfahren nach Anspruch 8, **dadurch gekennzeichnet, dass** das seitliche Schutzsystem einen oder mehrere horizontal in Längsrichtung verlaufende Träger (2, 2') umfasst, und dass die eine der Halterungen (4, 4') der Halterungsanordnung an den Trägern (2, 2') angebracht wird, so dass Befestigungselemente (8, 8') der Halterungsanordnung fest an den Trägern (2, 2') bei der ersten Seite und/oder zweiten Seite des Trägers angeordnet sind.

## Revendications

1. Agencement de console (1) permettant d'installer après coup un panneau latéral (3) sur un système de protection latéral existant (2, 2') d'un véhicule, d'une semi-remorque ou d'une remorque,
lequel système de protection latéral comprend un ou plusieurs supports longitudinaux horizontaux, l'agencement de console (1) comprenant :
- une première console allongée (4), qui est fixable au système de protection latéral (2, 2') et
- une seconde console allongée (5) qui est fixable de manière amovible à la première console (4),
- un ou plusieurs éléments de fixation (8, 8') permettant de fixer la première console au système de protection latéral (2, 2'), lesquels éléments (8, 8') sont aptes à être agencés entre la première console (4) et la seconde console (5),
le panneau latéral (3) étant fixable à l'une desdites première et seconde consoles, et l'agencement de console (1) étant fixé au système de protection latéral de sorte que le système de protection latéral (2, 2') soit entre la première console (4) et la seconde console (5) de l'agencement de console (1),
**caractérisé en ce que** la première console (4) comprend une rainure d'assemblage (7, 7'), qui est principalement dans une direction longitudinale de la console, une hauteur de fixation de l'agencement de console (1) par rapport au système de protection latéral (2, 2') étant agencée pour être réglée par le déplacement des un ou plusieurs éléments de fixation (8, 8') de l'agencement de console dans la rainure d' assemblage (7, 7') de la console (4).

2. Agencement de console selon la revendication 1, **caractérisé en ce que** les structures du système de protection latéral sont dans une direction horizontale et les consoles de l'agencement de console sont dans une direction verticale.

3. Agencement de console selon la revendication 1, **caractérisé en ce que** le système de protection latéral comprend deux supports longitudinaux horizontaux agencés à distance l'un de l'autre.

4. Agencement de console selon la revendication 1, **caractérisé en ce que** les premières extrémités des première et seconde consoles (4a, 5a) sont formées de sorte que la première extrémité de la seconde console (5a) est apte à être agencée sur la première extrémité de la première console (4a) dans une position verticale de l'agencement de console.

5. Agencement de console selon l'une quelconque des revendications précédentes, **caractérisé en ce qu'**une seconde extrémité de la seconde console (5b) est fixable à une seconde extrémité de la première console (4b) par l'intermédiaire de moyen de verrouillage (6, 6').

6. Agencement de console selon l'une quelconque des revendications précédentes, **caractérisé en ce que**
- le panneau latéral (3) est fixé amovible au système de protection latéral (2, 2') au moyen de l'agencement de console (1).

7. Agencement de console selon l'une quelconque des revendications précédentes, **caractérisé en ce qu'**il comprend en outre un déflecteur d'air (9) agencé à l'avant du panneau latéral (3) dans une direction longitudinale du véhicule.

8. Procédé permettant d'installer après coup un panneau latéral (3) sur un système de protection latéral (2, 2') d'un véhicule, d'une semi-remorque ou d'une remorque, dans lequel procédé
- un agencement de console (1) selon l'une quelconque des revendications 1 à 5 est fixé au système de protection latéral de sorte que le système de protection latéral (2, 2') soit entre la première console (4) et la seconde console (5) de l'agencement de console, et
- le panneau latéral (3) est fixé à l'une des consoles
**caractérisé en ce qu'**une hauteur de fixation de l'agencement de console (1) par rapport au système de protection latéral (2, 2') est réglée par le mouvement d'éléments de fixation (8, 8') de l'agencement de console dans des rainures d'assemblage (7, 7') de la console (4).

9. Procédé selon la revendication 8, **caractérisé en ce que** le système de protection latéral comprend un ou plusieurs supports longitudinaux horizontaux (2, 2'), et l'une des consoles (4, 4') de l'agencement de console est fixée aux supports (2, 2'), de sorte que des éléments de fixation (8, 8') de l'agencement de console soient agencés fermement contre les supports (2, 2') du premier côté et/ou du second côté du support.
